# EUROPEAN PATENT APPLICATION

(11) **EP 2 450 614 A2**
(43) Date of publication of application: **09.05.2012**
(21) Application number: 11187835.1
(22) Date of filing: 04.11.2011
(51) Int. Cl.: F21K 99/00, F21V 29/00, F21V 9/06, F21S 4/00, F21Y 101/02

(54) **Lamp device with color-changeable filter**

(30) Priority: 09.02.2011 TW 100104340; 05.11.2010 US 410511 P
(71) Applicant: Lextar Electronics Corp., 30075 Hsinchu (TW)
(72) Inventor: Yang, He-Shun, Hsinchu County 302 (TW); Chou, Shih-Chin, Kaohsiung City 813 (TW); Lai, Chun-Ming, Miaoli County 358 (TW); Hsieh, Chin-Kun, Hsinchu City 30069 (TW)
(74) Representative: von Kreisler Selting Werner

(57) **Abstract**

A lamp device includes a supporting frame, a light emitting diode (LED) array source, a light filter, two end caps and two couples of electrodes. The LED array source is disposed on the supporting frame. The light filter is arc-shaped and combined with the supporting frame as a tubular structure, wherein the arc surface of the light filter is a light emitting surface of the LED array source. The light filter is used for absorbing a ray in a specific wavelength range of the emitting light of the LED array source. The two end caps are disposed at two ends of the tubular structure respectively. The two couples of electrodes are disposed at two ends of the tubular structure and mounted on the two end caps respectively for electrically connecting to the LED array source.

## Description

This application claims the benefits of US provisional application Serial No. 61/410,511, filed November 5, 2010 and Taiwan application Serial No. 100104340, filed February 9, 2011, the subject matters of which are incorporated herein by reference.

### BACKGROUND OF THE INVENTION

### Field of the Invention

The invention relates in general to a light-emitting diode (LED) lamp device, and more particularly to a lamp device capable of absorbing a ray in a specific wavelength range.

### Description of the Related Art

In general, the LED light source, which provides illumination, can be used in various types of lamp structure such as the planar lamp device or the tubular lamp in majority. The planar lamp device has a light guide plate inside for refracting the light emitted by the LED light source disposed on the lateral side upwards so as to generate a planar light beam. The tubular lamp emits the light outwards through the light emitting surface of the LED light source. The tubular lamp whose cover has a curvature is used to replace the conventional fluorescent tube.

However, the fluorescent tube with specific wavelength, which requires a large driving power, has a shorter lifespan and higher replacement frequency, and incurs higher cost. When the fluorescent tube with specific wavelength is in use, the light of ultra-velvet waveband will be generated and radiated on the specific plastic film which encapsulates the surface of the lamp tube, and further cause the specific plastic film to be aged. Thus, during the manufacturing process, the aged plastic film, being unable to filter the light of exposure wavelength, will cause defects to the photosensitive materials and affect the conformity rate of the manufacturing process.

### SUMMARY OF THE INVENTION

The invention is directed to a lamp device used for absorbing a ray in a specific wavelength range and replacing the conventional fluorescent tube lest the ray of specific wavelength might leak and affect the yield rate of the manufacturing process.

According to an aspect of the present invention, a lamp device including a supporting frame, a light emitting diode (LED) array source, a light filter, two end caps and two couples of electrodes is provided. The LED array source is disposed on the supporting frame. The light filter is arc-shaped and combined with the supporting frame as a tubular structure, wherein the arc surface of the light filter is a light emitting surface of the LED array source. The light filter is used for absorbing a ray in a specific wavelength range of the emitting light of the LED array source. The two end caps are disposed at two ends of the tubular structure respectively. The two couples of electrodes are disposed at two ends of the tubular structure and mounted on the two end caps respectively for electrically connecting to the LED array source.

According to an alternative aspect of the present invention, a lamp device including a supporting frame, a first LED array source, a second LED array source, a reflector, a light guide plate and two light filters is provided. The supporting frame is plate-shaped. The supporting frame has an upper surface and a lower surface, wherein the four sides of the supporting frame connect the upper surface and the lower surface. The four sides includes a first side and the third side parallel to each other, and a second side and a fourth side parallel to each other, and the supporting frame is extended upwards from the first side and the third side in a direction perpendicular to the upper surface to form a first cover and a second cover respectively, wherein the first cover and the second cover both have an inner wall. The first LED array source is disposed on the inner wall of the first cover. The second LED array source is disposed on the inner wall of the second cover. The reflector is disposed on the upper surface of the supporting frame. The light guide plate is disposed on the reflector, and the light incoming surfaces on the two sides of the light guide plate face the first and the second LED array sources respectively for guiding the emitting light of the first and the second LED array sources towards the light emitting surface of the light guide plate. The two light filters are disposed between the first and the second LED array sources and the light incoming surfaces on the two sides of the light guide plate respectively for absorbing a rayin a specific wavelength range of the emitting light of the first and the second LED array sources.

According to an alternative aspect of the present invention, a lamp device including a supporting frame, a first LED array source, a second LED array source, a reflector, a light guide plate and a light filter is provided. The supporting frame is plate-shaped. The supporting frame has an upper surface and a lower surface, and the four sides of the supporting frame connect the upper surface and the lower surface. The four side includes a first side and a third side parallel to each other, and a second side and a fourth side parallel to each other, and the supporting frame is extended upwards from the first side and the third side in a direction perpendicular to the upper surface to form a first cover and a second cover respectively, wherein the first cover and the second cover both have an inner wall. The first LED array source is disposed on the inner wall of the first cover. The second LED array source is disposed on the inner wall of the second cover. The reflector is disposed on the upper surface of the supporting frame. The light guide plate is disposed on the reflector, wherein the light incoming surfaces on the two sides of the light guide plate face the first and the second LED array sources respectively for guiding the emitting light of the first and the second LED array sources towards the light emitting surface of the light guide plate. The light filter is disposed on the light emitting surface of the light guide plate for absorbing a ray in a specific wavelength range of the emitting light of the first and the second LED array sources.

The above and other aspects of the invention will become better understood with regard to the following detailed description of the preferred but non-limiting embodiment(s). The following description is made with reference to the accompanying drawings.

### BRIEF DESCRIPTION OF THE DRAWINGS

FIG. 1 shows a schematic diagram of a lamp device according to a first embodiment;

FIG. 2A shows a schematic diagram of a lamp device according to a second embodiment;

FIG. 2B shows a cross-sectional view of a lamp device according to a second embodiment;

FIG. 3A shows a schematic diagram of a lamp device according to a third embodiment;

FIG. 3B shows a cross-sectional view of a lamp device according to a third embodiment; and

FIG. 4 shows a distribution diagram of luminous flux after the ray of specific wavelength range is absorbed by a light filter according to an embodiment.

### DETAILED DESCRIPTION OF THE INVENTION

### First Embodiment: Tubular Lamp

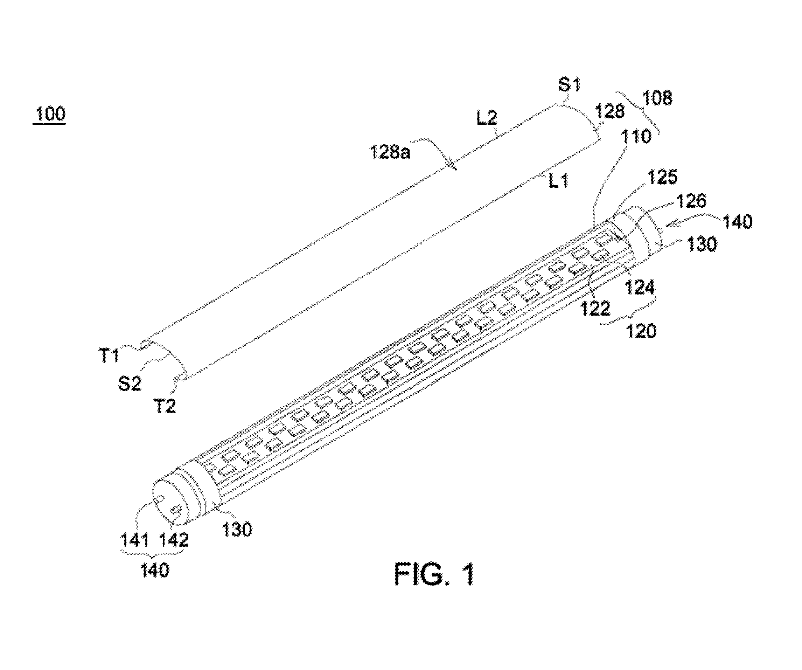

Referring to FIG. 1, a schematic diagram of a lamp device according to a first embodiment is shown. The lamp device 100 includes a supporting frame 110, a LED array source 120, a light filter 128, two end caps 130 and two couples of electrodes 140. The LED array source 120 is disposed on the supporting frame 110. The light filter 128 is arc-shaped and combined with the supporting frame 110 as a tubular structure 108, wherein the arc surface of the light filter 128 is a light emitting surface of the LED array source 120. The light filter 128 is used for absorbing a ray in a specific wavelength range of the emitting light of the LED array source 120. The two end caps 130 are disposed at two ends of the tubular structure 108 respectively. The two couples of electrodes 140 are disposed at the two ends of the tubular structure 108 and mounted on the two end caps 130 respectively for electrically connecting to the LED array source 120.

In an alternative embodiment, the light filter 128 has two long sides L1 and L2 and two short sides S1 and S2. The long sides L1 and L2 of the light filter 128 are fixed on the two sides of the supporting frame 110, and the two short sides S1 and S2 of the light filter 128 curl inwardly along the long sides L1 and L2, such that the light filter 128 forms a C-shaped curvature 128a. Thus, the two long sides L1 and L2 of the light filter 128 are extended along a horizontal direction of the curvature 128a, and the two short sides S1 and S2 of the light filter 128 are extended along a tangent direction of the curvature 128a.

In an alternative embodiment, the light filter 128 contains a light absorbent or a photosensitizer for absorbing the ray in specific wavelength range. The light absorbent such as an organic compound can be pasted on the light filter 128, or mixed in the light filter 128 during the manufacturing process of the light filter 128. Since the light filter 128, which can be directly formed as an arc-shaped cover, can absorb the ray in specific wavelength range, there is no need to encapsulate the surface of the lamp device 100 with a plastic film.

In addition, during the manufacturing of the light filter 128, two bar-shaped grooves T1 and T2 can be formed along two opposite sides of the long sides of the light filter 128 respectively, such that the light filter 128 can be fixed on the supporting frame 110 through the two grooves T1 and T2 to form a tubular structure 108.

Referring to FIG. 1. In an alternative embodiment, the supporting frame 110, formed by such as heat-dissipating metal, has sufficient strength and thickness. The supporting frame 110 is bar-shaped and used for fixing the LED array source 120 in the tubular structure 108 along a horizontal direction (the two long sides L1 and L2) and absorbing the heat generated by the LEDs 124 lest the heat might be concentrated inside the LEDs 124 and affect the luminous efficiency.

The LED array source 120 is disposed on the supporting frame 110 and includes a substrate 122 and a plurality of LEDs 124. The substrate 122, realized by such as an aluminum substrate, can be formed by several substrates connected in a vertical direction. The substrate 122 is used for fixing the LEDs 124 on the supporting frame 110. The short lateral sides of the substrate 122 have an anode wiring terminal 125 and a cathode wiring terminal 126 respectively for connecting the two electrodes 140 located on the same side. In an alternative embodiment, the substrate 122 of the LED array source 120 can be adhered on the supporting frame 110. The LEDs 124 are arranged on the substrate 122 in the form of an array to form an array light source. Moreover, the tubular structure 108 can further have a light equalizer or diffuser disposed inside for diffusing the emitting light of the LED array source 120 uniformly.

Furthermore, the end caps 130 are disposed at the two ends of the tubular structure 108, such that the two ends of the tubular structure 108 are closed. In an alternative embodiment, the end caps 130 can have a starter disposed inside for providing a DC current and enabling the LEDs 124 in the tubular structure 108 to generate electroluminescence. In an alternative embodiment, the starter can also be disposed under the supporting frame 110.

Besides, each couple of electrodes 140 includes a positive electrode 141 and a negative electrode 142. Each couple of electrodes 140 is disposed at one end of the tubular structure 108 and mounted on the end cap 130 and is connected to an external power for electrically connecting to the substrate 122 of the LED array source 120 to provide the necessary power. One end of each couple of electrodes 140 is protruded from the end cap 130 along a horizontal direction (the two long sides L1 and L2) and can be inserted into the socket for the fluorescent tube. Thus, the lamp structure 100 of the present embodiment can replace the conventional fluorescent tube. Furthermore, compared with the conventional fluorescent tube, the LEDs 124 of the lamp device 100 has longer lifespan, lower replacement frequency, and higher luminous efficiency, hence saving more power consumption.

### Second Embodiment: Plate-Shaped Lamp

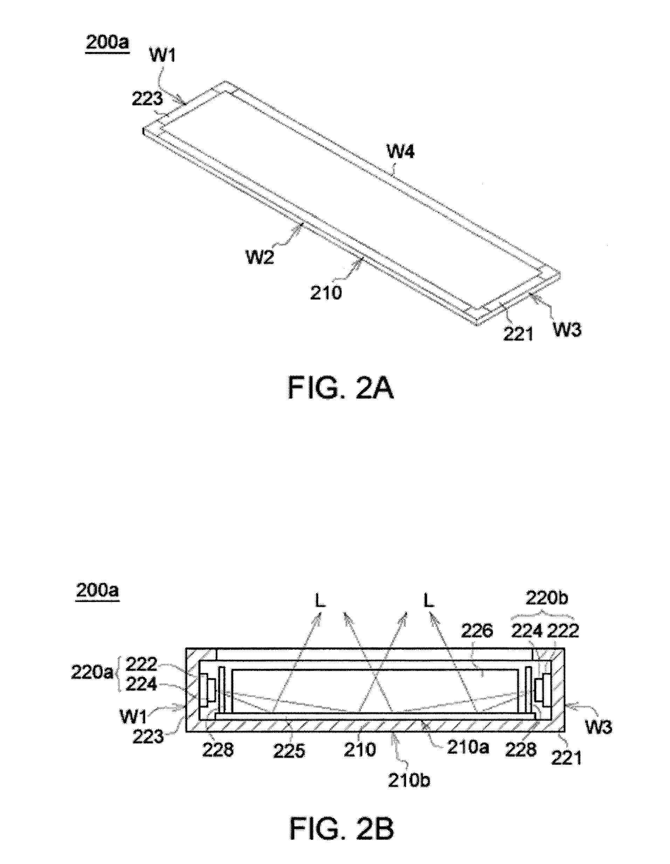

Referring to FIGS. 2A and 2B. FIG. 2A shows a schematic diagram of a lamp device according to a second embodiment. FIG. 2B shows a cross-sectional view of a lamp device according to a second embodiment. The lamp device 200a includes a supporting frame 210, a first LED array source 220a, a second LED array source 220b, a reflector 225, a light guide plate 226 and two light filters 228. The supporting frame 210 is plate-shaped, and has an upper surface 210a and a lower surface 210b, wherein the four sides of the supporting frame 210 connect the upper surface 210a and the lower surface 210b. The first side W1 and the third side W3 of the supporting frame 210 are parallel to each other, the second side W2 and the fourth side W4 of the supporting frame 210 are parallel to each other, and the supporting frame 210 is extended upwards from the first side W1 and the third side W3 in a direction perpendicular to the upper surface 210a to form a first cover 211 and a second cover 213 respectively, wherein the first cover 211 and the second cover 213 both have an inner wall. The first LED array source 220a is disposed on the inner wall of the first cover 211. The second LED array source 220b is disposed on the inner wall of the second cover 213. The reflector 225 is disposed on the upper surface 210a of the supporting frame 210. The light guide plate 226 is disposed on the reflector 225. The light incoming surfaces 226a on the two sides of the light guide plate 226 face the first and the second LED array sources 220a and 220b respectively for guiding the emitting light of the first and the second LED array sources 220a and 220b towards the light emitting surface 226b of the light guide plate 226. The two light filters 228 are respectively disposed between the first and the second LED array sources 220a and 220b and the light incoming surfaces 226a on the two sides of the light guide plate 226 for absorbing a ray in a specific wavelength range of the emitting light of the first and the second LED array sources 220a and 220b.

In an alternative embodiment, the light filter 228 contains a light absorbent or a photosensitizer for absorbing the ray of specific wavelength. The light absorbent such as an organic compound can be pasted on the light filter 228, or mixed in the light filter 228 during the manufacturing process of the light filter 228. The emitting light of the first and the second LED array sources 220a and 220b, having been filtered by the light filter 228 to exclude the ray of specific wavelength range, enters the light guide plate 226. The light emitting surface 226b of the light guide plate 226 faces upwards, and the bottom of the light guide plate 226 has a reflector 225 for reflecting the incoming light which enters from the lateral side towards the light emitting surface 226b. The light emitting surface 226b of the light guide plate 226 further has an optical film 227 realized by such as a diffuser, a prism or a film formed by a combination thereof for diffusing the emitting light of the first and the second LED array sources 220a and 220b uniformly.

In an alternative embodiment, the supporting frame 21, formed by such as heat-dissipating metal, has sufficient strength and thickness. The supporting frame 210 is plate-shaped, and the first cover 211 and the second cover 213 are formed on the two sides of the supporting frame 210 in the shape of an U such that the first and the second LED array sources 220a and 220b are disposed on the two sides of the light guide plate 226 along a horizontal direction and fixed in the first cover 211 and the second cover 213 and the heat generated by the LEDs 224 is absorbed by the supporting frame 210 lest the heat might be concentrated inside the LEDs 224 and affects the luminous efficiency.

Referring to FIG. 2B, the first and the second LED array sources 220a and 220b respectively include a substrate 222 and a plurality of LEDs 224. The substrate 222 is used for fixing the LEDs 224 on the inner walls of the first cover 211 and the second cover 213. In an alternative embodiment, the substrates 222 of the first and the second LED array sources 220a and 220b can be adhered on the inner walls of the first cover 211 and the second cover 213. The substrates 222 can provide a DC current through a starter for enabling the LEDs 224 to illuminate. Furthermore, compared with the conventional fluorescent tube, the LEDs 224 of the lamp device 200 has longer lifespan, lower replacement frequency, and higher luminous efficiency, hence saving more power consumption.

### Third Embodiment: the plate-shaped lamp

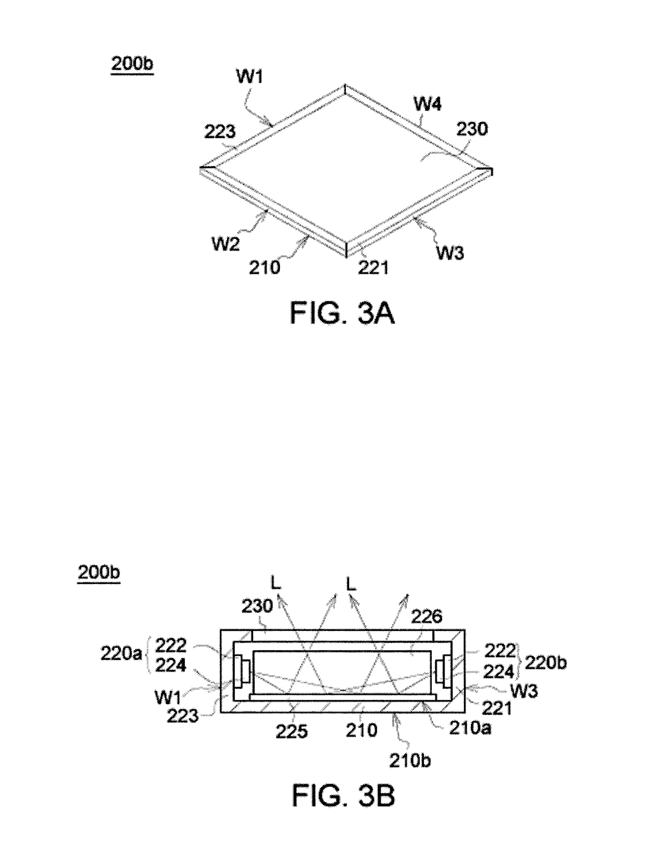

Referring to FIGS. 3A and 3B. FIG. 3A shows a schematic diagram of a lamp device according to a third embodiment. FIG. 3B shows a cross-sectional view of a lamp device according to a third embodiment. The lamp device 200b of the present embodiment is different from the lamp device of the second embodiment in that, the light filter 230 is disposed on the light emitting surface 226b of the light guide plate 226 for absorbing the ray in a specific wavelength range in the emitting light of the first and the second LED array sources 220a and 220b.

In an alternative embodiment, the light filter 230 contains a light absorbent or a photosensitizer for absorbing the ray in a specific wavelength range. The light absorbent such as an organic compound can be pasted on the light filter 230, or mixed in the light filter 230 during the manufacturing process of the light filter 230. The light filter 230 being plate-shaped can be fixed between the first cover 211 and the second cover 213, and keep a certain distance from the upper surface 210a of the supporting frame 210, such that the light guide plate 226 is located between the light filter 230 and the supporting frame 210.

In addition, the bottom of the light guide plate 226 has a reflector 225 for reflecting the emitting light of the first and the second LED array sources 220a and 220b which enters the light guide plate 226 from the lateral side towards the light emitting surface 226b. Then, the ray in specific wavelength range is filtered off by the light filter 230.

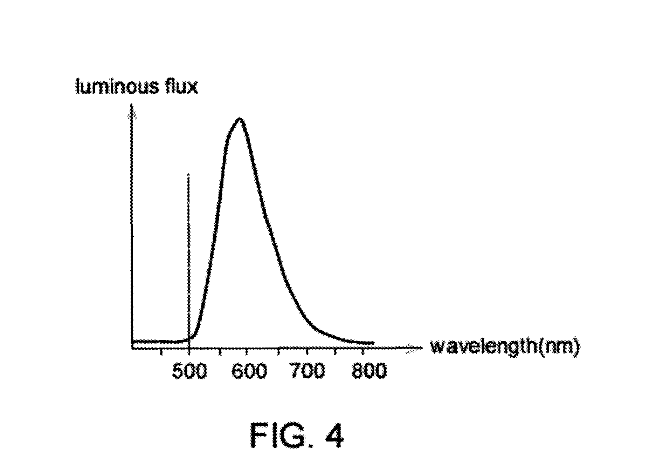

Referring to FIG. 4, a distribution diagram of luminous flux after the ray in specific wavelength range is absorbed by a light filter according to an embodiment is shown. As indicated in FIG. 4, the light filter can absorb the light whose wavelength range is below 500nm, and such range covers the waveband of near ultra-velvet light (280nm~400nm) and the waveband of a part of the visible light (400nm~500nm). Thus, the light filter of the present embodiment can absorb the ray in a specific wavelength range to filter off the wavelength that might cause exposure reaction to the photosensitive material and further increase the yield rate in the photolithography process. In addition, the light-absorbing characteristic of the light filter changes as the mixture formula of the light absorbent or photosensitizer varies, and the specific wavelength in the light to be absorbed is not limited to that of a ultra-velvet light.

The lamp device disclosed in the embodiments of the invention has many features exemplified below:

(1) Since the ray in a specific wavelength range is absorbed by a light filter, the conventional fluorescent tube which emits the ray of specific wavelength is not used, and the ray in a specific wavelength range will not leak and will not affect the yield rate of the manufacturing process.

(2) In an alternative embodiment, the light filter can be combined with an arc-shaped supporting frame as a tubular structure to replace the conventional fluorescent tube.

(3) In an alternative embodiment, the light filter and the LED array source can be disposed on the light incoming surface of a later side of the light guide plate for diffusing the emitting light towards the light emitting surface of the light guide plate uniformly.

(4) In an alternative embodiment, the light filter can be combined with the plate-shaped supporting frame as a plate-shaped lamp for absorbing the ray in a specific wavelength range directly, hence saving both assembly time and cost.

While the invention has been described by way of example and in terms of the preferred embodiment(s), it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A lamp device, comprising:
a supporting frame;
a LED array source disposed on the supporting frame;
a light filter arc-shaped and combined with the supporting frame as a tubular structure for absorbing a ray in a specific wavelength range of the emitting light of the LED array source, wherein the arc surface of the light filter is a light emitting surface of the LED array source;
two end caps disposed at the two ends of the tubular structure respectively; and
two couples of electrodes disposed at the two ends of the tubular structure and mounted on the two end caps respectively for electrically connecting to the LED array source.

2. The lamp device according to claim 1, wherein the LED array source comprises a substrate and a plurality of LEDs, wherein the substrate is used for fixing the LEDs on the supporting frame.

3. The lamp device according to claim 2, wherein the LEDs are arranged on the substrate in the form of an array.

4. The lamp device according to claim 1, wherein the supporting frame is formed by a heat-dissipating metal.

5. The lamp device according to claim 1, wherein the ray in the specific wavelength range is an ultra-velvet light.

6. A lamp device, comprising:
a supporting frame being plate-shaped and having an upper surface and a lower surface, wherein four sides of the supporting frame connect the upper surface and the lower surface, including a first side and a third side of the supporting frame being parallel to each other, a second side and a fourth side of the supporting frame being parallel to each other, the supporting frame is extended upwards from the first side and the third side in a direction perpendicular to the upper surface to form a first cover and a second cover respectively, and the first cover and the second cover both have an inner wall;
a first LED array source disposed on the inner wall of the first cover;
a second LED array source disposed on the inner wall of the second cover;
a reflector disposed on the upper surface of the supporting frame;
a light guide plate disposed on the reflector, wherein light incoming surfaces on the two sides of the light guide plate face the first and the second LED array sources respectively for guiding the emitting light of the first and the second LED array sources towards a light emitting surface of the light guide plate; and
two light filters respectively disposed between the first and the second LED array sources and the light incoming surfaces on the two sides of the light guide plate for absorbing a ray in a specific wavelength range of the emitting light of the first and the second LED array sources.

7. The lamp device according to claim 6, wherein the first and the second LED array sources respectively comprise a substrate and a plurality of LEDs, and the substrate is used for fixing the LEDs on the inner walls of the first cover and the second cover.

8. The lamp device according to claim 7, wherein the LEDs are arranged on the substrate in the form of an array.

9. The lamp device according to claim 6, wherein the supporting frame is formed by a heat-dissipating metal.

10. The lamp device according to claim 6, wherein the ray in the specific wavelength range is an ultra-velvet light.

11. The lamp device according to claim 6, further comprising an optical film disposed on the light guide plate.

12. The lamp device according to claim 11, wherein the optical film is a diffuser, a prism or a combination thereof.

13. A lamp device, comprising:
a supporting frame being plate-shaped and having an upper surface and a lower surface, wherein four sides of the supporting frame connect the upper surface and the lower surface, the four sides includes a first side and a third side parallel to each other, a second side and a fourth side parallel to each other, the supporting frame is extended upwards from the first side and the third side in a direction perpendicular to the upper surface to form a first cover and a second cover respectively, and the first cover and the second cover both have an inner wall;
a first LED array source disposed on the inner wall of the first cover;
a second LED array source disposed on the inner wall of the second cover;
a reflector disposed on the upper surface of the supporting frame;
a light guide plate disposed on the reflector, wherein light incoming surfaces on the two sides of the light guide plate face the first and the second LED array sources respectively for guiding the emitting light of the first and the second LED array sources towards a light emitting surface of the light guide plate; and
a light filter disposed on the light emitting surface of the light guide plate for absorbing a ray in a specific wavelength range of the emitting light of the first and the second LED array sources.

14. The lamp device according to claim 13, wherein the first and the second LED array sources respectively comprise a substrate and a plurality of LEDs, and the substrate is used for fixing the LEDs on the supporting frame.

15. The lamp device according to claim 14, wherein the LEDs are arranged on the substrate in the form of an array.

16. The lamp device according to claim 13, wherein the supporting frame is formed by a heat-dissipating metal.

17. The lamp device according to claim 13, wherein the ray in the specific wavelength range is an ultra-velvet light.

18. The lamp device according to claim 13, further comprising an optical film disposed on the light guide plate.

19. The lamp device according to claim 18, wherein the optical film is a diffuser, a prism or a combination thereof.
